# EUROPEAN PATENT APPLICATION

(11) **EP 1 380 378 A1**
(43) Date of publication of application: **14.01.2004**
(21) Application number: 03014554.4
(22) Date of filing: 07.07.2003
(51) Int. Cl.: B23K 11/31

(54) **Impacting limiting device for resistance Spot, Projection or roller welding machines actuated by an electrical actuator**

(30) Priority: 10.07.2002 IT BO20020445
(71) Applicant: TECNA S.p.A., 40024 Castel San Pietro Terme (Bologna) (IT)
(72) Inventor: Amadori, Ezio, 40024 Castel San Pietro Terme (Bo) (IT)
(74) Representative: Modiano, Guido, Dr.-Ing.

(57) **Abstract**

An impact limiting device for resistance spot, projection or roller welding machine, with actuation by an electrical actuator controlled by an electronic control unit, of the type that comprises a fixed arm (4) and a movable arm (5) provided with respective electrodes (7) that can be clamped onto the parts to be welded (8), characterized in that it comprises elastic means (11), interposed between the movable arm (5) and the electrical actuator (9), which are preloaded with a force that is slightly greater than the maximum working force of the welding machine (2) and are suitable to limit, in abnormal welding conditions, the maximum mechanical stress on the arms (4, 5) and the actuator (9) for a time interval sufficient to allow the unit to restore the correct working force.

## Description

The present invention relates to an impact limiting device for resistance spot, projection or roller welding machines actuated by an electrical actuator.

In the field of resistance welding of metal parts, for example for metal plates to be joined by overlapping their respective end flaps, electric resistance welding machines, also known as tack welding machines, are currently known and widely used; their electrodes, clamped onto the parts to be welded at the junction point, cause the flow of an intense welding current through said parts.

Models with an electric actuator offer advantages in terms of precision of the force applied, programming work strokes, large spans, and precision in speed, acceleration and deceleration control.

These advantages have negative consequences in the case of positioning errors, of the accidental presence of fixtures or templates between the electrodes, of incorrectly positioned parts to be welded, or of errors in programming the force, stroke or position. In these cases it is in fact necessary to limit the maximum mechanical stress on the elements of the welding machine for a time interval that is sufficient to allow the electronic control system to intervene in order to restore the correct force, thus avoiding possible damage.

The technical aim of the present invention is to obviate the cited drawbacks, by providing a limiting device that provides sufficient safety and reliability assurances even in abnormal or unexpected operating conditions.

Within this technical aim, an object of the present invention is to provide a device that allows versatile and efficient use of the welding machine in the various applications.

Another object of the present invention is to provide a structure that is simple, relatively easy to provide in practice, safe in use, effective in operation, and relatively low in cost.

This aim and these objects are all achieved by the present impact limiting device for resistance spot, projection or roller welding machine, with actuation by an electrical actuator controlled by an electronic control unit, of the type that comprises a fixed arm and a movable arm provided with respective electrodes that can be clamped onto the parts to be welded, characterized in that it comprises elastic means, interposed between said movable arm and said electrical actuator, which are preloaded with a force that is slightly greater than the maximum working force of said welding machine and are suitable to limit, in abnormal welding conditions, the maximum mechanical stress on said arms and said motor for a time interval sufficient to allow said unit to restore the correct working force.

Further features will become better apparent from the detailed description of a preferred but not exclusive embodiment of an impact limiting device for resistance spot, projection or roller welding machines, with actuation by means of an electrical actuator according to the invention, illustrated by way of non-limitative example in the accompanying drawings, wherein:
Figure 1 is a partially sectional side elevation view of a C-type welding machine provided with the limiting device according to the invention, with the electrodes in the open position;
Figure 2 is a partially sectional side elevation view of a detail of said C-type welding machine with electrodes clamped onto the parts to be welded;
Figure 3 is a partially sectional side elevation view of a detail of the C-type welding machine with electrodes clamped onto an element that is not related to the parts to be welded and has become accidentally interposed;
Figure 4 is a partially sectional side elevation view of a detail of the limiting device of the C-type welding machine;
Figure 5 is a partially sectional side elevation view of a welding machine of the L or X type, provided with a second embodiment of the device according to the invention;
Figure 6 is a partially sectional side elevation view of a detail of the limiting device of the welding machine of Figure 5;
Figure 7 is a partially sectional side elevation view of a detail of a straight welding machine, provided with a third embodiment of the limiting device according to the invention and with electrodes clamped onto the parts to be welded;
Figure 8 is a partially sectional side elevation view of a detail of the welding machine of Figure 7, in which the electrodes are clamped onto parts to be welded that are positioned incorrectly;
Figure 9 is a partially sectional side elevation view of a detail of a straight welding machine provided with a fourth embodiment of the device according to the invention, with electrodes clamped onto the parts to be welded;
Figure 10 is a partially sectional side elevation view of a detail of the straight welding machine of Figure 9, in which the electrodes are clamped onto incorrectly positions parts to be welded;
Figure 11 is a partially sectional side elevation view of a detail of the straight welding machine of Figure 9, in the initial step of a welding operation with fast tracking;
Figure 12 is a partially sectional side elevation view of a detail of the welding machine of Figure 11, in the final step of a welding operation with fast tracking.

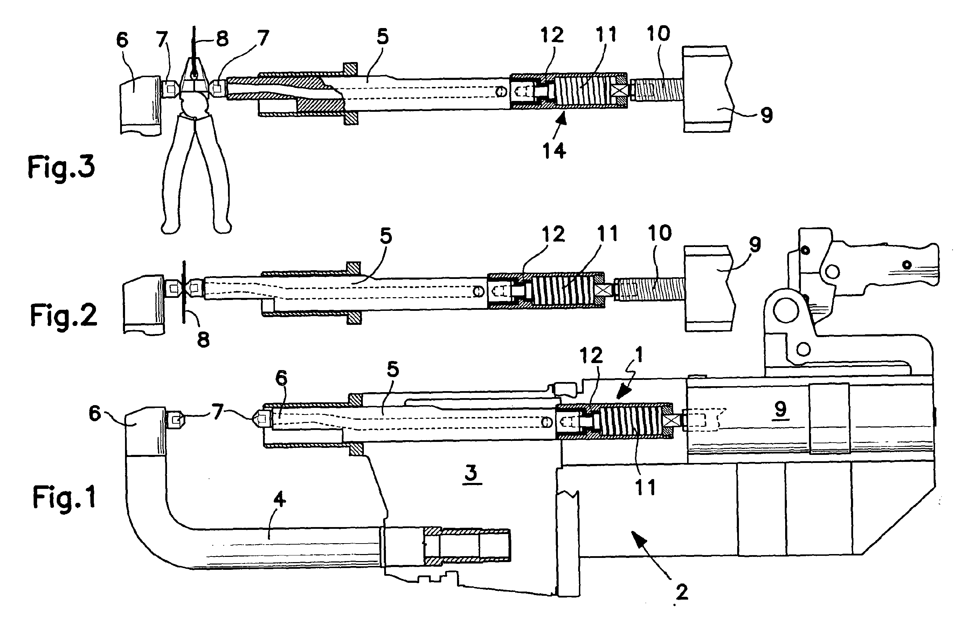

With particular reference to Figures 1, 2 and 3, the reference numeral 1 generally designates an impact limiting device according to the invention, mounted on a resistance welding machine 2 of the spot type, of the kind commonly known as C-type due to its shape.

The C-type welding machine comprises a frame 3 for supporting a fixed arm 4 and a movable arm 5, which are provided at their ends with electrode holders 6 for respective welding electrodes 7, which can be clamped onto the parts to be welded 8. The movable arm 5 can move between a passive retracted position (Figure 1) and a position for clamping onto the parts (Figure 2), thanks to the presence of an electrical actuator 9, which is controlled by an electronic control unit that can be programmed in relation to the stroke of the arm, its speed, acceleration and deceleration; the actuator 9 is preferably of the type with a recirculating ballscrew 10 or rollers, which can slide axially.

The fixed arm 4 is preferably elbow-shaped, is internally hollow and is coupled to the frame 3 rigidly or so that it can float. The movable arm 5 has an elongated shape and is mounted, so that it can slide with respect to the frame 3, substantially coaxially to the screw 10 of the electric actuator 9.

According to the invention, the impact limiting device is interposed between the movable arm 5 and the screw 10 of the actuator. The device comprises elastic means 11, which are preloaded to a force that is slightly greater than the maximum working force of the welding machine 2 (clamping force of the arms 4 and 5); the elastic means 11 are thus suitable to limit, in abnormal operating conditions, the maximum mechanical stress on the components of the welding machine for a time that is sufficient to allow the electronic control unit to restore the correct working force.

With reference to Figure 3 for the sake of better comprehension, abnormal welding conditions can occur if the parts to be welded 8 are prepared or positioned incorrectly, or if foreign objects or fixtures become interposed between the electrodes 7. In such a condition, the movable arm 5 impacts against the parts 8 at an excessively high speed with respect to the programmed value: this can cause an excessive mechanical stress on the components of the welding machine.

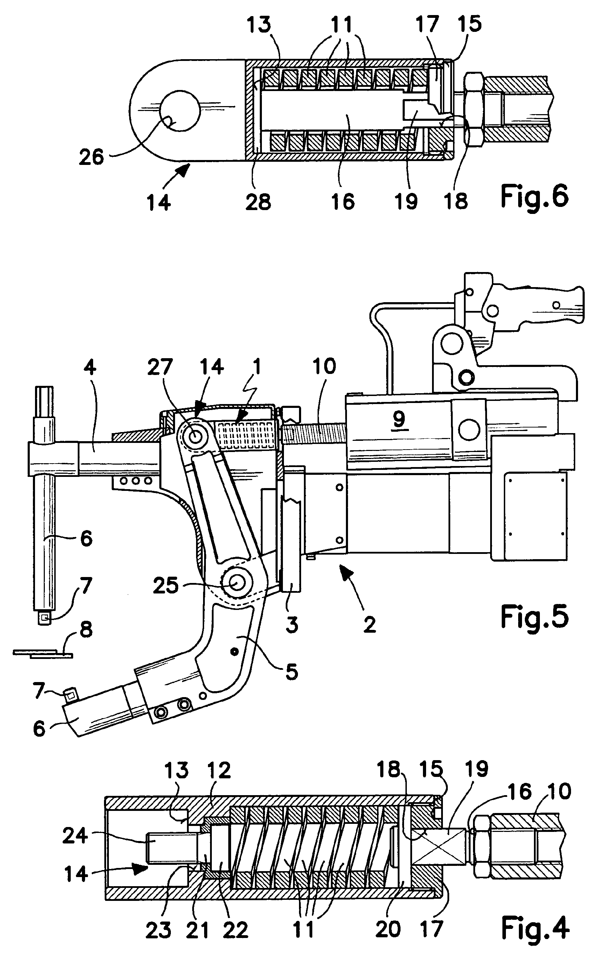

The elastic means 11 are constituted (Figure 4) by a helical spring inserted in a bush 12, which has a first closed end 13, provided with means 14 for connection to the movable arm 5, and a second open end 15. A rod 16 can slide through the second end 15, is rigidly connected to the recirculating ballscrew 10 of the electrical actuator 9, and is suitable to actuate by compression, beyond the preset preloading, the helical spring 11 in abnormal operating conditions.

A closure plug 17 is fixed (for example screwed) at the second open end 15 and is affected centrally by a polygonal opening 18 for the sliding of the rod 16: said plug constitutes an abutment surface for the spring 11 and also allows to adjust its preloading. Advantageously, the rod 16 has, along its lateral surface, facets 19 that engage the sides of the polygonal opening 18, preventing the mutual rotation of said rod 16, said plug 17 and said screw 10.

The rod 16 is provided, at its end, with a collar 20, which actuates by compression one end of the spring 11, its opposite end abutting against the first closed end 13 of the bush 12.

The means 14 for connecting the bush 12 to the movable arm 5 comprise a screw 21, in which the head 22 abuts internally at a through hole 23 formed through the first closed end 13 of the bush 12 and the stem 24 is screwed to said movable arm with suitable electrical insulation.

The operation of the device according to the invention is as follows. The movable arm 5, actuated by the electrical actuator 9 so as to clamp onto the parts to be welded 8, first undergoes an acceleration and then performs the approach stroke at a substantially constant speed until it decelerates proximate to the parts, according to a control program that is preset according to the operating conditions of the weld. If unexpected obstacles, such as supporting fixtures or incorrectly positioned parts, become interposed between the electrodes in the stroke of the movable arm 5, said movable arm impacts against the parts 8 at an unexpected and excessively high speed: the collar 20 of the rod 16 then compresses the spring 11 beyond its preset preloading against the first end 13 of the bush 12, allowing to limit the mechanical stresses until the control unit has restored the correct working force or has provided the stroke for the retraction stroke of the movable arm 5 to its initial position.

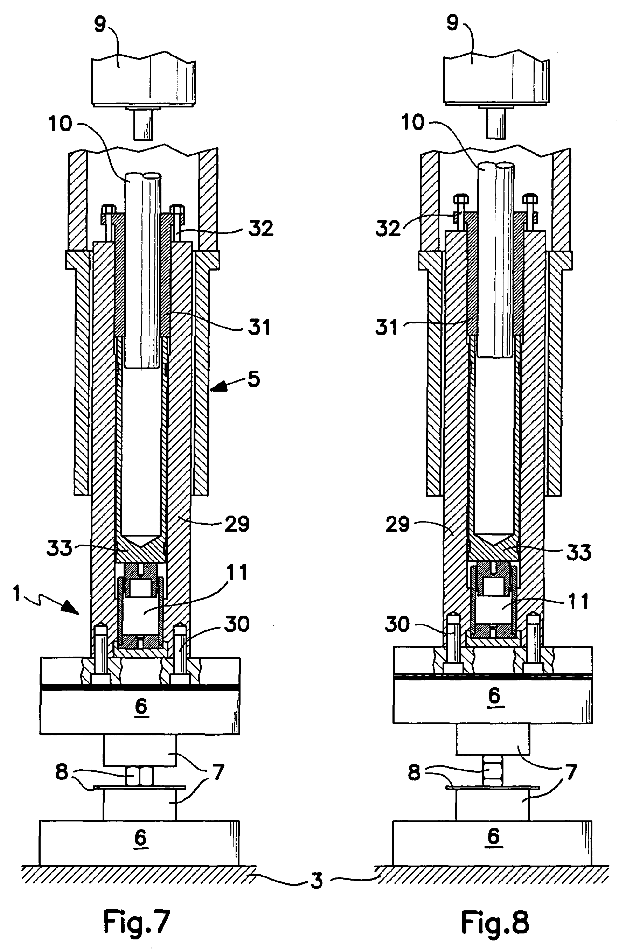

A second embodiment of the device according to the invention is mounted on a welding machine that has a so-called L-type or X-type structure (consider Figures 5 and 6, in which the elements that correspond to the ones described earlier are designated by the same reference numerals).

In said welding machine, the movable arm 5 is articulated, in its central portion, to the frame 3 of the welding machine 2 about a first transverse axis 25, and its end portion that lies opposite the one provided with the electrode holder 6 is connected to the limiting device: in the specific case, the connection means 14 are constituted by an eye 26, which is rigidly coupled to the first closed end 13 of the bush 12 and is articulated, about a second transverse axis 27, to the end portion of said movable arm 5.

The welding machine furthermore provides for the mounting of a longer rod 16, which is provided, at its free end, with a plate 28 for actuating one end of the spring 11, inside which said rod 16 is inserted, the opposite end being in abutment against the closure plug 17 (Figure 6).

In abnormal operating conditions, the movable arm 5 impacts against the parts to be welded 8 at an excessive speed: the force applied by the plate 28 to the helical spring 11 in excess of the preset load allows, by compression of said spring against the plug 17, to limit the maximum mechanical stress on the components of the welding machine, allowing the control unit to restore the force to correct values in the necessary time or to reposition the movable arm 5 in the initial configuration.

Figures 7 and 8 relate to a third embodiment of the device according to the invention, mounted on a so-called straight welding machine (the components that correspond to the ones described earlier are designated by the same reference numerals).

The lower face of the nut 31 rests on the upper face of a connecting sleeve 33, which is closed at its base and is inserted coaxially within the stem 29 and acts axially on the elastic means 11: the elastic means 11, coupled monolithically inside the base of the stem 29, are constituted by a gas-assisted spring-damper unit that is coaxial to said stem.

If, in its downward stroke to clamp the parts to be welded 8, the movable arm 5 encounters an unexpected obstacle, constituted for example by an incorrectly positioned part, the action of the screw 10 through the nut 31 and the sleeve 33 induces a compression of the gas-assisted spring-damper unit 11 that limits the maximum mechanical stress on the elements of the welding machine, thus allowing the control unit to restore the correct working force or to make the movable arm retract into the initial position.

The movable arm 5 comprises a tubular stem 29, with which the respective electrode holder 6 with electrode 7 is monolithically coupled in a downward region, being connected for example by screws 30 and insulated electrically; the parts 8 to be welded are arranged on the opposite electrode 7, which is supported by the respective electrode holder 6, which is fixed with respect to the frame 3. The stem 29 can move axially from a passive upper position to a lower position for clamping on the parts to be welded 8, and there is an internally threaded nut 31 which is inserted coaxially at the top of the stem 29 and is coupled so that it can slide along a guide 32 that is rigidly coupled to said stem 29 and is screwed along the recirculating ballscrew 10 of the electrical actuator 9.

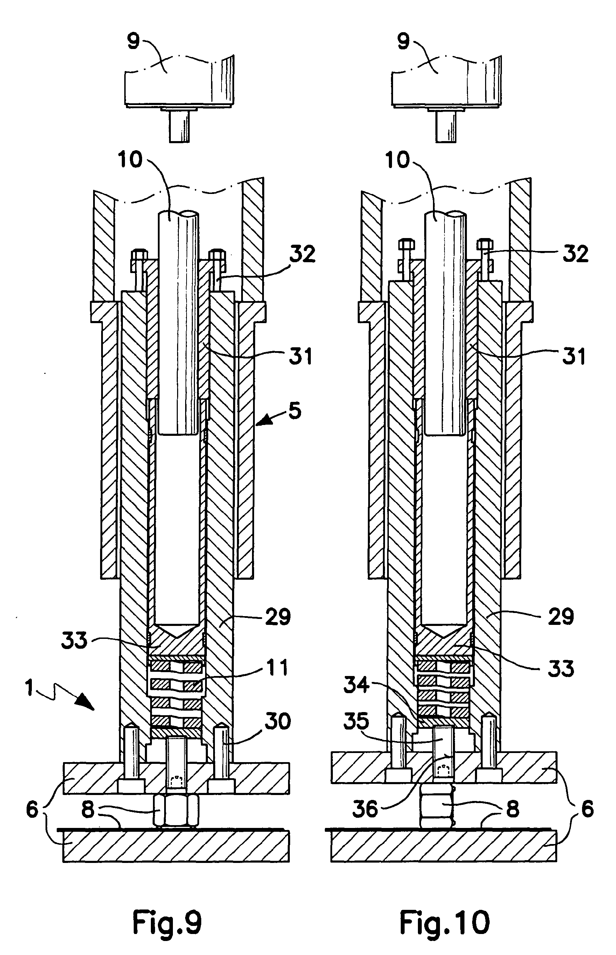

Figures 9, 10, 11 and 12 refer to a straight welding machine, on which a fourth embodiment of the device according to the invention is mounted; in said fourth embodiment, the elastic means 11 are constituted (Figure 9) by a helical cylindrical spring (which has a square cross-section), advantageously having a high elastic constant, which is coaxial to the stem 29 and is actuated by the sleeve 33 at its upper end.

The spring 11 in turn abuts, at its lower end, against a disk 34, whose axial position with respect to the stem 29 is adjustable by means of a grub screw 35, which is engaged in a respective female thread 36 provided in the upper electrode holder 6; by acting on the grub screw 35 it is possible to vary the preloading of the spring 11 at will.

If the preloading of the spring 11 is set to a value that is greater than the welding force, the device works, as explained earlier, solely as an impact limiter: the spring 11 is compressed further only if the movable arm 5 impacts parts 8 to be welded that are positioned incorrectly (Figure 10).

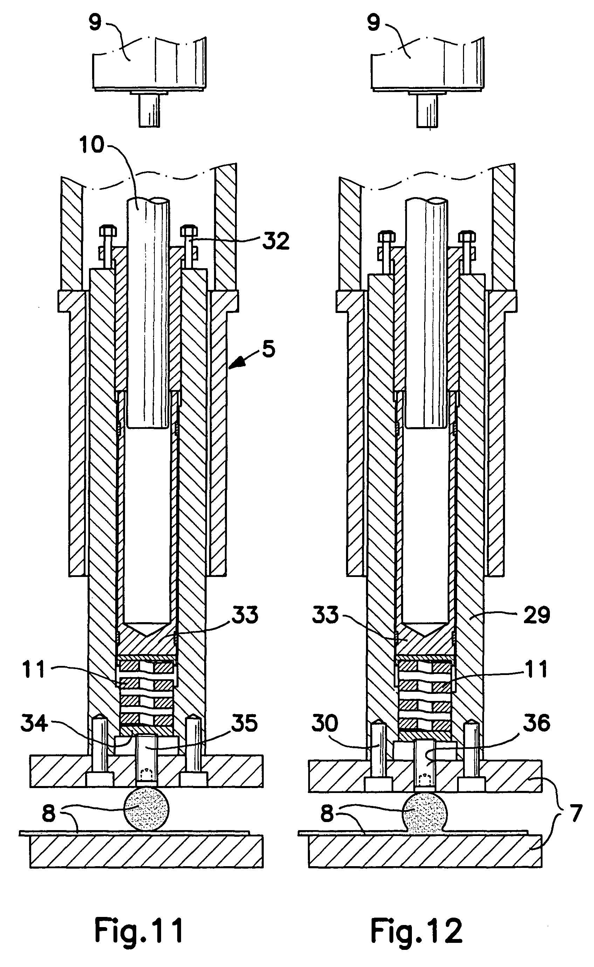

If instead the preloading of the spring 11 is set to a value that is lower than the welding force, the device according to the invention makes the straight welding machine particularly adapted to perform welding operations with fast tracking, recommended for joining particularly flexible parts 8 to be welded (Figures 11 and 12).

In this operating situation, the descent of the movable arm 5 onto the parts to be welded 8 causes a gradual compression of the spring 11, until it reaches the nominal value of the welding force (Figure 11). Then, after the application of the suitable welding current, the flexible parts 8 to be welded decrease in thickness (typically by a few millimeters, Figure 12); this reduction is compensated by the rapid elongation of the spring 11, so that the welding force is not reduced due to the flexibility of the parts to be welded 8.

It is noted that for each one of the embodiments described above the elastic means 11 can, as an alternative, be constituted by a cylindrical element made of elastomer.

It has thus been shown that the invention achieves the intended aim and objects.

The invention thus conceived is susceptible of numerous modifications and variations, all of which are within the scope of the inventive concept.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application no. BO 2002A000445, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An impact limiting device for resistance spot, projection or roller welding machine, with actuation by an electrical actuator controlled by an electronic control unit, of the type that comprises a fixed arm (4) and a movable arm (5) provided with respective electrodes (7) that can be clamped onto the parts to be welded (8), **characterized in that** it comprises elastic means (11), interposed between said movable arm (5) and said electrical actuator (9), which are preloaded with a force that is slightly greater than the maximum working force of said welding machine (2) and are suitable to limit, in abnormal welding conditions, the maximum mechanical stress on said arms (4, 5) and said actuator (9) for a time interval sufficient to allow said unit to restore the correct working force.

2. The device according to claim 1, **characterized in that** said elastic means (11) are constituted by a helical spring, which is inserted in a bush (12) that has a first end (13), which is closed and provided with means (14) for connection to said movable arm (5), and a second open end (15), for the axial sliding of a rod (16) that is rigidly connected to the recirculating ballscrew (10) of said electric actuator (9), said rod (16) passing through an opening (18) of a closure plug (17) that is provided in said second end (15) and being suitable to compress said preloaded helical spring (11) in abnormal load conditions during welding.

3. The device according to claims 1 and 2, **characterized in that** said connection means (14) are constituted by a screw (21), in which the head (22) abuts internally at a through hole (23) that is formed in said first end (13) of said bush (12) and the stem (24) is screwed into said movable arm (5).

4. The device according to one or more of the preceding claims, **characterized in that** said rod (16) has an end collar (20) that compresses one end of said helical spring (11), the other end of said spring abutting against said first end (13) of said bush (12).

5. The device according to one or more of the preceding claims, **characterized in that** said connection means (14) are constituted by an eye (26), which is rigidly coupled to said first end (13) for articulation to said movable arm (5), said rod (16) having an end plate (28) that actuates one end of said helical spring (11), the opposite end abutting against said plug (17).

6. The device according to one or more of the preceding claims, **characterized in that** said opening (18) of said plug (17) is substantially polygonal and **in that** said rod (16) has, along its lateral surface, a plurality of facets (19) that engage on the sides of said opening (18) and are suitable to prevent the mutual rotation of said plug (17), said rod (16) and said recirculating ballscrew (10).

7. The device according to one or more of the preceding claims, **characterized in that** said movable arm (5) comprises a tubular stem (29) that is provided, in a downward region, with said electrode (7), which can move axially in order to clamp the parts (8) to be welded by means of a nut (31) that is threaded internally and can slide coaxially along a guide (32) at the top of said stem (29) and is screwed along said recirculating ballscrew (10) actuated by said electrical actuator (9), the lower face of said nut (31) acting, by means of a connecting sleeve (33) that is inserted in said stem (29), on said elastic means (11), which are rigidly connected inside the base of said stem (29), so that the mechanical force on said arms (4, 5) and on said actuator (9), in abnormal welding conditions, is limited by the compression to which said elastic means (11) are subjected.

8. The device according to one or more of the preceding claims, **characterized in that** said elastic means (11) are constituted by a gas spring damper unit that is coaxial to said stem (29).

9. The device according to one or more of the preceding claims, **characterized in that** said elastic means (11) are constituted by a cylindrical helical spring, which is interposed between the lower end of said sleeve (33) and a disk (34) that is associated with a grub screw (35) for adjusting the preloading, said spring (11) being suitable, if preloaded to a value higher than the value of the welding force, to limit the impact with incorrectly positioned parts to be welded (8), said spring (11) being further suitable, if preloaded to a value that is lower than the nominal welding force, to keep constant said nominal welding force in operations with rapid tracking on particularly flexible parts to be welded (8).

10. The device according to one or more of the preceding claims, **characterized in that** said elastic means (11) are constituted by a cylindrical element made of elastomer.
